# EUROPEAN PATENT APPLICATION

(11) **EP 2 044 984 A1**
(43) Date of publication of application: **08.04.2009**
(21) Application number: 08155595.5
(22) Date of filing: 02.05.2008
(51) Int. Cl.: A63F 13/00

(54) **Method for adjusting character ability value and server for controlling the same**

(30) Priority: 28.08.2007 KR 20070086744
(71) Applicant: Neople Co., Ltd., Gangnam-gu Seoul 135-090 (KR)
(72) Inventor: Kim, Yun Jong, Seoul 143-868 (KR)
(74) Representative: Rupprecht, Kay

(57) **Abstract**

A method and server for adjusting a character ability value is provided. Advantages/disadvantages occurring due to a character's ability value difference can be adjusted since ability values associated with the characters can be adjusted in real time when the characters are matched against each other in a program running on a client, an imbalance in ability values occurring due to level differences can be solved by adjusting ability values of objects associated with the characters, such as a summoned creature, a pet, a throwing weapon, and projectile, and a combat can be performed under a condition of equal ability values. Consequently, participation in a service can be encouraged by arousing a user's interest.

## Description

### CROSS-REFERENCE TO RELATED APPLICATION

This application claims the benefit of Korean Patent Application No. 10-2007-0086744, filed on August 28, 2007, in the Korean Intellectual Property Office, the disclosure of which is incorporated herein by reference.

### BACKGROUND OF THE INVENTION

### 1. Field of the Invention

The present invention relates to a method and server for adjusting a character ability value, and more particularly, to a method and server for adjusting a character ability value for balancing character ability value.

### 2. Description of Related Art

An online game refers to a game that can be performed in real time using a network such as the Internet and the like, and currently, the online game is propelled along with advancement of the Internet.

A user is required to play a monotonously-repeating game by himself/herself in a conventional game for a single player, conversely, in the online game, the user can enjoy a game with other players in real time by establishing a program in a hard disk drive and connecting to a server. As described, the online game has become popular since users can enjoy various aspects by sharing each other's feeling, cooperating with each other, and being matched against each other via the online game.

Also, an online game in which hundreds of players simultaneously participate is referred to as a massive multiplayer online game or a Massive Multi-Player Online Role Playing Game (MMORPG), and the massive multiplayer online game is performed via packet traffic between clients or via a server, based on a plurality of clients/servers. Currently, various devices in addition to a computer, such as a cellular phone, a portable game device, and the like, provide various platforms for online games.

In the computer game or the online game, when two players become opponents and are matched against each other, this is referred to as a player versus player (PVP) game, or a dual game.

However, in a conventional MMORPG in which combat between characters is performed according to a level or ability value based on the accumulation of experience points, and even though each user's ability value is different from other characters, the combat is performed from a viewpoint of a level comparison according to the experience points, not from a viewpoint of a user's game operation and control ability.

Therefore, in the conventional game program, an interest is decreased and user's participation in a service may be hindered since characters with a wide disparity in ability due to a level difference are matched against each other.

### BRIEF SUMMARY

An aspect of the present invention provides a method and server for adjusting a character ability value which can adjust advantages/disadvantages occurring due to a character's ability value difference since ability values associated with characters can be adjusted in real time when the characters are matched against each other in a program running on a client, can solve an imbalance in ability values occurring due to level differences by adjusting ability values of objects associated with the characters, such as a summoned creature, a pet, and a projectile and combat can be performed under a condition of equal ability values, and consequently can encourage participation in a service by arousing a user's interest.

According to an aspect of the present invention, there is provided a method for adjusting a character ability value including: loading a plurality of characters in a specific combat stage; and adjusting an ability value associated with at least one character of at least two characters to a specific ability value when the at least two characters are matched against each other from the loaded plurality of characters.

In an aspect of the present invention, the adjusting of the ability value associated with at least one character of at least two characters to the specific ability value adjusts the ability value associated with at least one character of at least two characters to an identical ability value associated with any one character of the plurality of characters.

In an aspect of the present invention, the adjusting of the ability value associated with at least one character of at least two characters to the specific ability value adjusts the ability value associated with at least one character of the at least two characters to a reference ability value of a predetermined value.

In an aspect of the present invention, the adjusting of the ability value associated with at least one character of at least two characters to the specific ability value adjusts, to ability values associated with other characters, the ability value associated with at least one character of the at least two characters to an ability value being generated based on a comparison.

In an aspect of the present invention, the adjusting of the ability value associated with at least one character of at least two characters to the specific ability value adjusts the ability value associated with at least one character of the at least two characters in real time, from a point in time of the combat between the plurality of characters.

In an aspect of the present invention, the method for adjusting the character ability value further includes: reporting the ability value associated with the plurality of characters.

In an aspect of the present invention, the method for adjusting the character ability value further includes: establishing whether to adjust the ability value associated with at least one character of at least two characters to a specific ability value when the at least two characters are matched against each other from the loaded plurality of characters.

In an aspect of the present invention, the method for adjusting the character ability value further includes: adjusting an ability value of an object, which is associated with the at least one character of the at least two characters, to a character ability value associated the object.

In an aspect of the present invention, the object is at least one of an item, a summoned creature, a pet, and a projectile..

In an aspect of the present invention, the ability value of the object, which is adjusted to an ability value associated with a character that has generated the object, is transmitted via a peer to peer (P2P) method between clients.

In an aspect of the present invention, the plurality of characters are avatars.

Additional aspects, features, and/or advantages of the invention will be set forth in part in the description which follows and, in part, will be apparent from the description, or may be learned by practice of the invention.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a diagram illustrating a system for adjusting a character ability value according to an exemplary embodiment of the present invention;
FIG. 2 is a configuration diagram illustrating an ability value adjustment server of FIG. 1;
FIG. 3 is a diagram illustrating a method for adjusting a character ability value according to an exemplary embodiment of the present invention; and
FIG. 4 is a flowchart illustrating a method for adjusting a character ability value according to an exemplary embodiment of the present invention.

### DETAILED DESCRIPTION OF EMBODIMENTS

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

Descriptions will be based on a game which will be implemented in a client in an embodiment of the present invention, however the present invention can be applied to various programs including a web program for providing a service via a web site.

A character level development online game which will be described in the present specification of the present invention refers to an online game which is capable of developing a character level when experiences with respect to a user's character are accumulated, for example there exists a Massive Multi-Player Online Role Playing Game (MMORPG).

Also, the character which will be described in the present specification of the present invention indicates an object which is embodied in a program or a game of a user client, which can be controlled by the user, and which corresponds to an avatar, a pet, and the like.

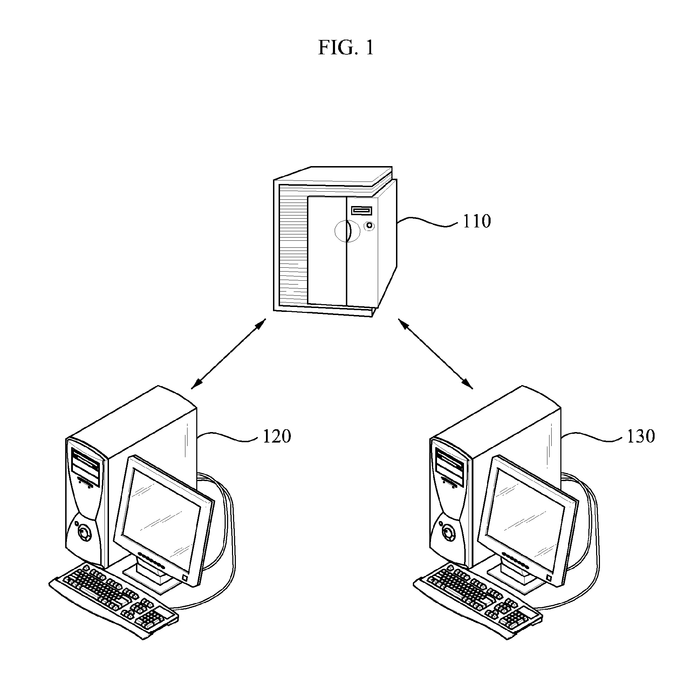

FIG. 1 is a diagram illustrating a system for adjusting a character ability value according to an exemplary embodiment of the present invention.

As illustrated in FIG. 1, the system for adjusting the character ability value according to the present invention includes an adjustment server 110, a first client 120, and a second client 130.

In various programs such as a game implemented on each of the first client 120 and the second client 130 and a web program, the system for adjusting the character ability value according to an exemplary embodiment of the present invention is to adjust an ability value associated with a character in the various programs or to adjust an ability value of an object associated with the character.

The first client 120 and the second client 130 may execute a program via an establishment process of an additional program.

The ability adjustment server 110 enables downloading of the program to the first client 120 and the second client 130, and performs synchronization between the first client 120 and the second client 130, and substantially controls execution of the program.

Specifically, when executing the program in the clients 120 and 130, the ability adjustment server 110 loads the characters on the clients 120 and 130 in a specific combat stage, and enables the loaded characters to be matched against each other, adjusts an ability value of a specific character when the characters are matched against each other, thereby solving an imbalance game play occurring due to ability disparities between each character.

Also, the ability adjustment server 110 may adjust an ability value of at least one character of a plurality of characters to an ability value of other characters, or to a reference ability value of a predetermined value being determined by the clients 120 and 130 or a program service provider.

Also, the ability value adjustment server 110 may adjust the ability value of the at least one character of the plurality of characters to a value being generated based on a comparison of an ability value associated with one character of the plurality of characters.

Specifically, the ability value adjustment server 110 may adjust the ability value of the at least one character of the plurality of characters in real time, from a point in time of the combat between the plurality of characters.

As an example, when a level of a first character embodied in the program of the first client 120 is '50', and when a level of a second character embodied in the program of the second client 130 is '10', a direct combat between the first character and the second character, and a combat of an object generated or owned by each character is unreasonable since there are great ability differences due to different levels of the first character and the second character. Therefore, the ability value adjustment server 110 may decrease the level of the first character to '10' or may increase the level of the second character to '50' in order to equalize the levels of the first character and the second character. Also, when the ability value of the at least one character of the plurality of characters is adjusted to the reference ability value of the predetermined value, for example, when the predetermined ability level is '70', the first character and the second character may be evenly matched against each other since both have an ability value of level '70'. Also, according to the comparison of the ability values between the characters, the ability values of each of the first character and the second character may be adjusted to have a level '30' being an average of ability level '10' and ability level '50' and thereby may evenly match the first character and the second character against each other.

The ability value adjustment server 110 may report an ability value of each character to the clients 120 and 130 for the adjusting of the ability value associated with the characters, and may determine whether to adjust the character ability value based on the reported character ability value.

Also, the ability value adjustment server 110 may adjust an ability value of an object associated with the characters. Specifically, the ability value adjustment server 110 may adjust the ability value of the object associated with the characters, such as an item, a summoned creature, a pet, and a projectile, thereby solving an imbalance occurring due to the object generated by each character when the characters are matched against each other.

In this instance, the adjusting of the character ability value or the object may be an adjustment depending on a characteristic value. That is, it is possible to establish whether to adjust the characteristics of the characters or the object. As an example, when a specific character has an ability value of a poison, it is possible to establish or adopt whether to eliminate or deteriorate a characteristic of the poison to balance the ability values of the characters.

As described above, the ability value of the object, which is adjusted to the ability value associated with the characters having generated the objects, may be transmitted via a peer to peer (P2P) method between clients. Specifically, the ability value adjustment server 110 performs synchronization only with respect to data generated from a direct combat between characters, and data generated using the objects generated by the characters are directly transmitted between the clients 120 and 130, and thereby reduces loads by reducing data to be processed.

As described above, through the adjusting of the ability value associated with the characters and the ability value associated with the objects, advantages/disadvantages occurring due to characters' ability value differences can be adjusted when the characters are matched against each other.

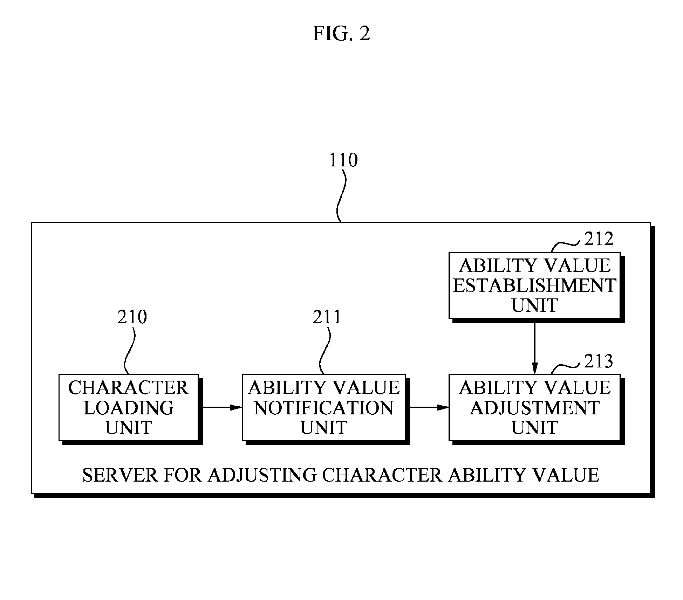

FIG. 2 is a configuration diagram illustrating the ability value adjustment server 110 of FIG. 1.

Referring to FIG. 2, the ability value adjustment server 110 according to the exemplary embodiment of the present invention includes a character loading unit 210, an ability value notification unit 211, an ability value establishment unit 212, and an ability value adjustment unit 213.

The character loading unit 210 loads a plurality of characters in a specific stage.

The ability value notification unit 211 reports ability values associated with the plurality of characters, and a user may acquire information about ability values of their own character and other characters, such as a level, via clients.

The ability value adjustment unit 213 adjusts an ability value associated with at least one character of at least two characters to a specific ability value when at least two characters of loaded plurality of characters are matched against each other.

The ability value adjustment unit 213 adjusts the ability value associated with at least one character of the at least two characters to an ability value associated with any one character of the plurality of characters, adjusts the ability value associated with at least one character of the at least two characters to a reference ability value of a predetermined value, or adjusts, to an ability values associated with other characters, the ability value associated with at least one character of the at least two characters to an ability value generated based on a comparison.

Also, the ability value adjustment unit 213 may adjust the ability value associated with the at least one character of the at least two characters in real time, from a point in time of a combat between the characters.

Specifically, the ability value adjustment unit 213 may adjust an ability value of an object associated with the at least one character of the at least two characters to an ability value associated with a character associated with the object. In this instance, the object is corresponds to an item, a summoned creature, a pet, and a projectile. In this instance, the ability value of the object, which is adjusted to the ability value associated with the character having generated the object, may be transmitted via a P2P method, therefore the ability value of the object may be directly adjusted, not by way of clients.

The ability value adjustment unit 212 may establish whether to adjust the ability value associated with the at least one character of the at least two characters to a specific ability value when the at least two characters of the loaded plurality of characters are matched against each other.

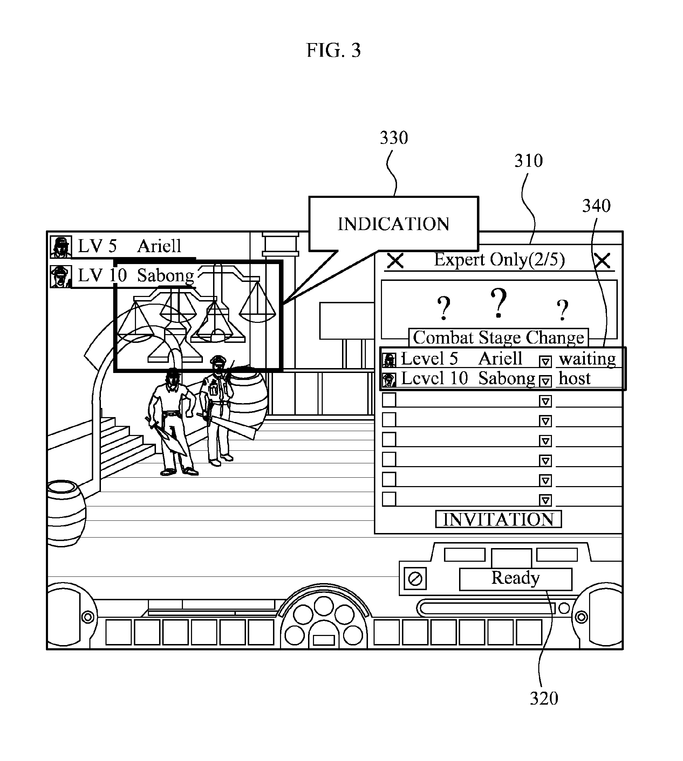

FIG. 3 is a diagram illustrating a method for adjusting a character ability value according to an exemplary embodiment of the present invention.

The character ability adjustment server 110 reports to clients 120 and 130 about an ability value associated with a character, and a user may acquire information, as illustrated in FIG. 3, about ability values of their own character and other characters, such as a level, via clients.

Information 340 such as user names and character ability values presently existing in the same combat stage are displayed in an ability value notification screen 310, that is also a level notification screen Accordingly, a user of a client may determine whether to adjust an ability value based on the information, and may proceed with combat.

An indication 330 is displayed to report that the ability value is adjusted when the user adjusts the ability value, the user verifies the completion of the adjustment 320 when the adjustment is completed, and the user may then proceed with the combat.

In this instance, a point in time for the adjustment of the characters may be configured in real time, from the same as a point in time as proceed with the combat. Specifically, a result of the adjustment is not adopted prior to the combat with other characters, however the ability values may be adjusted in real time, from a point in time of a direct combat with other characters or a combat using objects such as an item, a summoned creature, a pet, and a projectile.

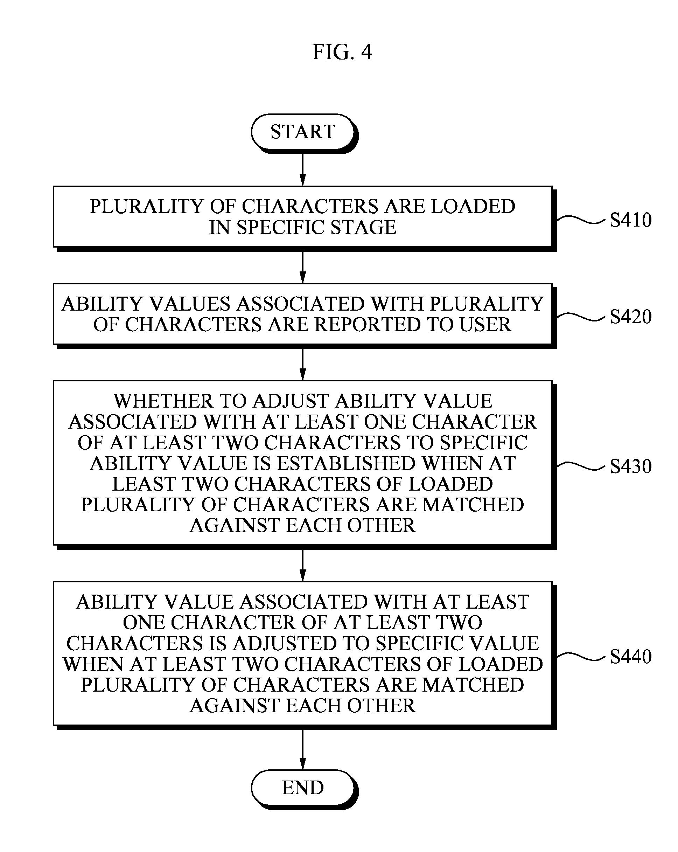

FIG. 4 is a flowchart illustrating a method for adjusting a character ability value according to an exemplary embodiment of the present invention.

A plurality of characters are loaded in a specific stage in operation S410, and ability values associated with the plurality of characters are reported to a user in operation S420.

An ability value of each character is acquired via the notification, and whether to adjust an ability value associated with at least one character of the at least two characters to a specific ability value is established when the at least two characters of the loaded plurality of characters are matched against each other in operation S430.

The ability value associated with the at least one character of the at least two characters is adjusted to the specific ability value when the at least two characters of the loaded plurality of characters are matched against each other in operation S440.

The adjusting of the ability value associated with the at least one character of the at least two characters to the specific ability value may adjust the ability value associated with the at least one character of the at least two characters to an identical ability value associated with any one character of the plurality of characters.

Specifically, the adjusting of the ability value associated with the at least one character of the at least two characters to the specific ability value may adjust the ability value of the at least one character of the plurality of characters to an identical value as ability values of other characters, or to a reference ability value being determined by the clients or a program service provider.

Also, the adjusting of the ability value associated with the at least one character of the at least two characters to the specific ability value may adjust, to ability value associated with other characters, the ability value of the at least one character of the plurality of characters to a value being relatively comparable and generated based on a comparison, and may adjust the ability value of the at least one character of the plurality of characters in real time, from a point in time of the combat between the plurality of characters.

Also, the adjusting of the ability value associated with the at least one character of the at least two characters to the specific ability value may adjust an ability value of an object associated with characters, such as an item, a summoned creature, a pet, and a projectile, thereby solving an imbalance occurring when the characters are matched against each other using the object generated by the characters.

The ability value of the object, which is adjusted to the ability value associated with the characters, is transmitted via a P2P method, a server performs synchronization only with respect to data generated from a direct combat between characters, and data generated using the object generated by the characters may be directly transmitted between the clients.

According to the exemplary embodiments of the present invention, it is possible to adjust advantages/disadvantages occurring due to a character's ability value difference since ability values associated with characters can be adjusted in real time when the characters are matched against each other in a program running on a client, can solve an imbalance in ability values occurring due to level differences by adjusting ability values of objects associated with the characters, such as a summoned creature, a pet, and a projectile, and can perform a combat under a condition of equal ability values, and consequently can encourage participation in a service by arousing a user's interest.

Although a few exemplary embodiments of the present invention have been shown and described, the present invention is not limited to the described exemplary embodiments.

Instead, it would be appreciated by those skilled in the art that changes may be made to these exemplary embodiments without departing from the principles and spirit of the invention, the scope of which is defined by the claims and their equivalents.

## Claims

1. A method for adjusting a character ability value in an online game control method, comprising:
loading a plurality of characters in a specific combat stage; and
adjusting an ability value associated with at least one character of at least two characters to a specific ability value when the at least two characters are matched against each other from the loaded plurality of characters.

2. The method of claim 1, wherein the adjusting of the ability value associated with at least one character of at least two characters to the specific ability value adjusts the ability value associated with at least one character of at least two characters to an identical ability value associated with any one character of the plurality of characters.

3. The method of claim 1, wherein the adjusting of the ability value associated with at least one character of at least two characters to the specific ability value adjusts the ability value associated with at least one character of the at least two characters to a reference ability value of a predetermined value.

4. The method of claim 1, wherein the adjusting of the ability value associated with at least one character of at least two characters to the specific ability value adjusts, to ability values associated with other characters, the ability value associated with at least one character of the at least two characters to an ability value being generated based on a comparison.

5. The method of claim 1, wherein the adjusting of the ability value associated with at least one character of at least two characters to the specific ability value adjusts the ability value associated with at least one character of the at least two characters in real time, from a point in time of the combat between the plurality of characters.

6. The method of claim 1, further comprising:
reporting the ability value associated with the plurality of characters.

7. The method of claim 1, further comprising:
establishing whether to adjust the ability value associated with at least one character of at least two characters to a specific ability value when the at least two characters are matched against each other from the loaded plurality of characters.

8. The method of claim 1, further comprising:
adjusting an ability value of an object, which is associated with the at least one character of the at least two characters, to a character ability value associated the object.

9. The method of claim 8, wherein the object is at least one of an item, a summoned creature, a pet, and a projectile.

10. The method of claim 8, wherein the ability value of the object, which is adjusted to the ability value associated with the character that has generated the object, is transmitted via a peer to peer (P2P) method between clients.

11. The method of claim 1, wherein the plurality of characters are avatars.

12. A server for adjusting a character ability value, comprising:
a character loading unit loading a plurality of characters in a specific combat stage; and
an ability adjustment unit adjusting an ability value associated with at least one character of at least two characters to a specific ability value when the at least two characters are matched against each other from a loaded plurality of characters.

13. The server of claim 12, wherein the ability value adjustment unit adjusts the ability value associated with at least one character of at least two characters to an identical ability value associated with any one character of the plurality of characters.

14. The server of claim 12, wherein the ability value adjustment unit adjusts the ability value associated with at least one character of the at least two characters to a reference ability value of a predetermined value.

15. The server of claim 12, wherein the ability value adjustment unit adjusts, to ability values associated with other characters, the ability value associated with at least one character of the at least two characters to an ability value being generated based on a comparison.

16. The server of claim 12, wherein the ability value adjustment unit adjusts the ability value associated with at least one character of the at least two characters in real time, from a point in time of the combat between the characters.

17. The server of claim 12, further comprising:
an ability value information unit reporting the ability associated with the characters.

18. The server of claim 12, further comprising:
an ability establishment unit establishing whether to adjust the ability value associated with at least one character of at least two characters to a specific ability value when the at least two characters are matched against each other from the loaded plurality of characters.

19. The server of claim 12, wherein the ability adjustment unit adjusts an ability value of an object, which is associated with the at least one character of the at least two characters, to a character ability value associated the object.

20. The server of claim 19, wherein the object is at least one of an item, a summoned creature, a pet, and a projectile.

21. The server of claim 19, wherein the ability value of the object, which is adjusted to an ability value associated with a character that has generated the object, is transmitted via a peer to peer (P2P) method between clients.

22. The server of claim 12, wherein the plurality of characters are avatars.
